# EUROPEAN PATENT APPLICATION

(11) **EP 4 745 086 A1**
(43) Date of publication of application: **20.05.2026**
(21) Application number: 24839370.4
(22) Date of filing: 05.06.2024
(51) Int. Cl.: C01D 15/08, C22B 3/24, C22B 3/44, C22B 26/12

(54) **LITHIUM CARBONATE PRODUCTION METHOD**

(30) Priority: 10.07.2023 JP 2023112981
(71) Applicant: SUMITOMO METAL MINING CO., LTD., Tokyo 105-8716 (JP)
(72) Inventor: TAKANO, Masatoshi, Niihama-shi, Ehime 792-0002 (JP); ASANO, Satoshi, Tokyo 105-8716 (JP); HEGURI, Shinichi, Niihama-shi, Ehime 792-0002 (JP); IKEDA, Osamu, Niihama-shi, Ehime 792-0002 (JP); MATSUMOTO, Shinya, Niihama-shi, Ehime 792-0002 (JP); KUDO, Yohei, Niihama-shi, Ehime 792-0002 (JP); SENBA, Yusuke, Niihama-shi, Ehime 792-0002 (JP); MURAKAMI, Akihiro, Niihama-shi, Ehime 792-0002 (JP); MAEDA, Kyohei, Niihama-shi, Ehime 792-0002 (JP)
(74) Representative: Watermeyer, Nicholas
(86) International application number: PCT/JP2024/020516
(87) International publication number: WO 2025/013473

(57) **Abstract**

Provided is a production method that allows obtaining high-purity lithium carbonate at low cost without using large quantities of chemicals. A lithium adsorption step (1), a lithium elution step (2), an impurity removal step (3), and a conversion step (4) are sequentially executed. In the impurity removal step (3), an oxidant is added to a second lithium-containing solution to oxidize manganese in the second lithium-containing solution to a form of insoluble manganese dioxide. Alkali is added to the second lithium-containing solution after executing an oxidation step (3A) to precipitate out mainly magnesium in the second lithium-containing solution and manganese remaining after the oxidation step as hydroxides to obtain a post-neutralization liquid in which magnesium and manganese are decreased. The post-neutralization liquid is brought into contact with an ion exchange resin to remove mainly calcium and aluminium and to remove residual magnesium and manganese to obtain a highly pure lithium carbonate-containing solution.

## Description

### BACKGROUND

### 1. Technical Field

The present invention relates to a method for producing lithium carbonate. More particularly, the present invention relates to a method for producing lithium carbonate that allows obtaining high-purity lithium carbonate at low cost.

### 2. Related Art

In recent years, demand for lithium-based rechargeable batteries for use in vehicle batteries has been growing. Lithium has then been produced in the form of lithium carbonate or lithium hydroxide from salt lake brine or ores containing lithium such as lithia ore (Li₂O, Al₂O₃, 2SiO₄) as raw materials, which are then refined. As the lithium contents of these raw materials is lower than those of other components, a concentration step is first executed to increase the concentration of lithium, followed by a conversion step to convert them to lithium carbonate. For example, when salt lake brine is used as raw material, the sun concentration method is mainly used in major lithium-producing countries such as Chile and Argentina.

In this solar concentration method, the salt lake brine is first concentrated in a concentration pond called a solar pond in the concentration step, in which the major components, such as sodium and potassium, are precipitated out as salts such as sodium chloride and potassium chloride, thereby concentrating the highly soluble lithium chloride in the aqueous solution. After the concentration, impurities are removed in a purification step as necessary, and in the following conversion step, the lithium chloride is converted to lithium carbonate, which has a lower solubility, by the addition of sodium carbonate. In this conversion step, the lithium carbonate precipitates as a solid due to its low solubility. Lithium carbonate can be recovered in this way.

On the other hand, solvent extraction, ion exchange, and chromatographic separation methods have been used to produce lithium carbonate and other substances that are not affected by climatic conditions or the liquid properties of salt lake brine. However, the salt lake brine, which contains a large amount of lithium, contains far more impurities such as sodium, potassium, magnesium and calcium than lithium. Therefore, when the solvent extraction method is used in the concentration step, there is a problem that the extractant has low selectivity for lithium. In other words, it is necessary to first remove the impurities from a liquid containing a large amount of the impurities using a large amount of chemicals. Thus, there is a problem that the overall cost increases. The ion exchange method also has the problem of low selectivity of lithium in the ion exchange resin, and, as with the solvent extraction method, the cost of the concentration step is high. The chromatographic separation method is a method for separate recovery of lithium using the difference in elution rate between lithium and impurities other than lithium in the liquid (Patent Document 1). This method also has the problem that the amount of chemicals used in the concentration step increases, and the equipment cost increases due to the need for a large number of steps.

In contrast to the above-described methods, Non-Patent Document 1 discloses a lithium recovery method using a lithium selective adsorbent. Specifically, after lithium is adsorbed using the lithium selective adsorbent in the concentration step, impurities are removed by adding alkaline carbonate in the conversion step, heating and concentration, and finally precipitation by adding carbonate, thereby obtaining lithium carbonate in a powder form. However, the concentration of impurities (for example, magnesium and sodium) in the lithium carbonate obtained by the method in Non-Patent Document 1 is as high as several hundred to several thousand ppm. In addition, this method does not include a step to remove calcium after the selective adsorption of lithium. Thus, when brine containing high calcium content is treated, the calcium remaining in trace amounts after the selective adsorption of lithium cannot be removed. The concentration of the calcium in lithium carbonate as the final product is as high as those of magnesium and sodium. Such impurity concentrations are unacceptable when used as a raw material for lithium-ion batteries, for which demand has recently increased rapidly.

In each of the above-mentioned conventional technologies, when lithium carbonate is produced, if the lithium concentration step employs a conventional solvent extraction method or the like, there is a problem that the cost of obtaining lithium from a liquid with high impurities is high. In a conventional technology of Non-Patent Document 1, a method of obtaining lithium carbonate using a lithium selective adsorbent in the conversion step is disclosed, but as mentioned above, it is not possible to obtain high-purity lithium carbonate with a grade that can be used as a battery raw material.

Patent Document 1: WO 2012/163791 A1
Non-Patent Document 1: Tang Weiping, "Lithium Recovery System from brine," [online], June 11, 2010, Kagawa Industry Support Foundation, [November 22, 2018], Internet (https://www.kagawa-isf.jp/wp-content/uploads/2022/02/21tang.pdf)
In view of the above circumstances, it is an object of the present invention to provide a method for producing lithium carbonate that allows obtaining high-purity lithium carbonate at low cost without using large quantities of chemicals.

### SUMMARY

A method for producing lithium carbonate according to a first invention includes: (1) a lithium adsorption step of bringing a first lithium-containing solution having a low lithium concentration as raw material into contact with a lithium selective adsorbent to adsorb lithium on the lithium selective adsorbent; (2) a lithium elution step of eluting lithium from the lithium selective adsorbent on which lithium is adsorbed to obtain a second lithium-containing solution; (3) an impurity removal step of removing a part of metal ions from the second lithium-containing solution to obtain a third lithium-containing solution; and (4) a conversion step of converting the lithium salt contained in the third lithium-containing solution to lithium carbonate to obtain crystals of the lithium carbonate. These steps are sequentially executed. The impurity removal step includes: (3A) an oxidation step of oxidizing manganese in the second lithium-containing solution to a form of insoluble manganese dioxide by adding oxidant to the second lithium-containing solution; (3B) a neutralization step of adding alkali to the second lithium-containing solution after executing the oxidation step to precipitate out mainly the magnesium in the second lithium-containing solution and the manganese remaining after the oxidation step as hydroxides to obtain a post-neutralization liquid in which magnesium and manganese are decreased; and (3C) an ion-exchange step of bringing the post-neutralization liquid obtained in the neutralization step into contact with an ion exchange resin to remove mainly calcium and aluminium and to remove magnesium and manganese remaining after the neutralization step to obtain the third lithium-containing solution. These steps are sequentially executed.

In the method for producing lithium carbonate according to a second invention, which is in the first invention, the conversion step includes: (4A) a carbonation step of adding a carbonic acid source to the third lithium-containing solution obtained in the impurity removal step to obtain a crude lithium carbonate; (4B) a hydrocarbonating step of blowing carbon dioxide into the slurry containing the crude lithium carbonate to obtain a lithium hydrogen carbonate solution; and (4C) a decarbonation step of heating the lithium hydrogen carbonate solution to obtain a purified lithium carbonate. These steps are sequentially executed.

In the method for producing lithium carbonate according to a third invention, which is in the second invention, a temperature in the decarbonation step of the conversion step is 50°C or higher and 100°C or lower.

In the method for producing lithium carbonate according to a fourth invention, which is in any one of the first invention to the third invention, the lithium selective adsorbent in the lithium adsorption step is manganese oxide in which lithium manganese oxide is brought into contact with an acid to desorb lithium in the lithium manganese oxide.

In the method for producing lithium carbonate according to a fifth invention, which is in any one of the first invention to the fourth invention, a hydrogen ion concentration of the acid used in the lithium elution step is 0.3 mol/L or more and 2.0 mol/L or less.

In the method for producing lithium carbonate according to a sixth invention, which is in any one of the first invention to the fifth invention, a pH of the post-neutralization liquid in the neutralization step of the impurity removal step is 8.5 or more and 12 or less.

In the method for producing lithium carbonate according to a seventh invention, which is in any one of the first invention to the sixth invention, an ion exchange resin used in the ion-exchange step of the impurity removal step is an iminodiacetic acid type chelating resin.

According to the first invention, the impurities such as manganese, magnesium, calcium, and sodium can be removed with high precision by executing four basic steps and, in the impurity removal step among them, three steps from the oxidation step to the ion-exchange step. As a result, the high-purity lithium carbonate can be obtained at low cost without using large quantities of chemicals.

According to the second invention, the high-purity lithium carbonate can be obtained because calcium carbonate and sodium in the third lithium-containing liquid are removed at a high level by executing the three steps in the conversion step.

According to the third invention, the temperature in the decarbonation step being 50°C or higher and 100°C or lower allows the decarbonation reaction to proceed sufficiently to obtain the purified high-purity lithium carbonate.

According to the fourth invention, the use of the manganese oxide from which lithium has been desorbed enables ion exchange with lithium to execute efficient adsorption of lithium.

According to the fifth invention, by setting the hydrogen ion concentration of the acid to the range of 0.3 mol/L or more and 2.0 mol/L or less, it can be used in place of a mineral acid used in the lithium elution step.

According to the sixth invention, the pH of the post-neutralization liquid should be 8.5 or more and 12 or less. Thus, magnesium and manganese can be efficiently precipitated to be removed.

According to the seventh invention, the use of the iminodiacetic acid type chelating resin as the ion exchange resin allows reducing the calcium concentration after the treatment to a low concentration.

### BRIEF DESCRIPTION OF DRAWINGS

Fig. 1 is a basic step diagram in a method for producing lithium carbonate according to an embodiment of the present invention;
Fig. 2 is a flowchart of an impurity removal step in the method for producing lithium carbonate according to the embodiment of the present invention; and
Fig. 3 is a flowchart of a conversion step in the method for producing lithium carbonate according to the embodiment of the present invention.

### DETAILED DESCRIPTION

Next, embodiments of the present invention will be described based on the drawings. However, the embodiments described below are to exemplarily describe methods for producing lithium carbonate for embodying a technical idea of the present invention, and the present invention does not limit the method for producing lithium carbonate to the following.

The method for producing lithium carbonate according to the present invention includes the basic steps (1) to (4) below, which are sequentially executed.
(1) a lithium adsorption step: a step of bringing a first lithium-containing solution having a low lithium concentration as raw material into contact with a lithium selective adsorbent to adsorb lithium on the lithium selective adsorbent.
(2) a lithium elution step: a step of eluting lithium from the lithium selective adsorbent on which lithium is adsorbed to obtain a second lithium-containing solution.
(3) an impurity removal step: a step of removing a part of metal ions from the second lithium-containing solution to obtain a third lithium-containing solution.
(4) a conversion step: a step of converting the lithium salt contained in the third lithium-containing solution to lithium carbonate to obtain lithium carbonate crystals.

The impurity removal step (3) includes the following three steps (3A) to (3C), which are sequentially executed.
(3A) an oxidation step: a step of oxidizing manganese in the second lithium-containing solution to a form of insoluble manganese dioxide by adding oxidant to the second lithium-containing solution.
(3B) a neutralization step: a step of adding alkali to the second lithium-containing solution after executing the oxidation step (3A) to precipitate out mainly the magnesium in the second lithium-containing solution and the manganese remaining after the oxidation step as hydroxides to obtain a post-neutralization liquid in which magnesium and manganese are decreased.
(3C) an ion-exchange step: a step of bringing the post-neutralization liquid obtained in the neutralization step (3B) into contact with an ion exchange resin to remove mainly calcium and aluminium and to remove magnesium and manganese remaining after the neutralization step to obtain the third lithium-containing solution.

In the impurity removal step (3) of the present invention, the three steps including the oxidation step (3A), the neutralization step (3B) and the ion-exchange step (3C) are executed to ensure removing the metals other than lithium. The oxidant is used in the oxidation step (3A), and alkali is used to remove the impurities in the neutralization step (3B), and then the ion exchange resin is used to remove the remaining impurities. Since the most impurities are removed by the lithium adsorption step (1), which selectively adsorbs lithium, the impurity removal step (3) allows obtaining high-purity lithium carbonate at low cost without using large quantities of chemicals.

In the present invention, the conversion step (4) is preferably the following three steps (4A) to (4C).
(4A) a carbonation step: a step of adding a carbonic acid source to the third lithium-containing solution obtained in the impurity removal step (3) to obtain the crude lithium carbonate.
(4B) a hydrocarbonating step: a step of blowing carbon dioxide into the slurry containing the crude lithium carbonate to obtain a lithium hydrogen carbonate solution.
(4C) a decarbonation step: a step of heating the lithium hydrogen carbonate solution to obtain the purified lithium carbonate.

The conversion step (4) can remove sodium and potassium contained in the third lithium-containing liquid at a high level, thereby increasing the purity of the resulting lithium carbonate.

### (First Embodiment)

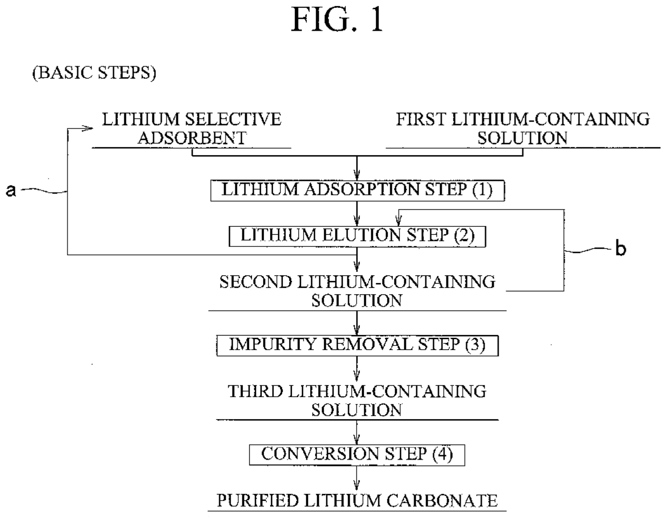

Fig. 1 illustrates a method for producing lithium hydroxide according to an embodiment of the present invention. Details of respective steps are described below based on Figs. 1 to 3.

### <Lithium Adsorption Step (1)>

The lithium adsorption step (1) illustrated in Fig. 1 is a step of bringing a lithium selective adsorbent into contact with a first lithium-containing solution with a relatively low lithium concentration, such as salt lake brine, as the raw material, and selectively adsorbing lithium from the first lithium-containing solution onto the lithium selective adsorbent.

The reaction equation in the lithium adsorption step (1) is shown in Formula 1. The reaction equation where H_{1.6}Mn_{1.6}O₄ is used as the lithium selective adsorbent is shown here, but is not particularly limited to this. For example, the lithium selective adsorbent obtained from the lithium manganese oxide having a spinel structure can also be used. The lithium selective adsorbent obtained from the lithium manganese oxide is preferably the manganese oxide in which the lithium manganese oxide is brought into contact with an acid to desorb lithium in this lithium manganese oxide. The manganese oxide from which lithium has been desorbed allows ion exchange with lithium to execute efficient adsorption of lithium.

[Formula 1] H_{1.6}Mn_{1.6}O₄ + 1.6LiCl → Li_{1.6}Mn_{1.6}O₄ + 1.6HCl

The method of bringing the lithium selective adsorbent into contact with the first lithium-containing solution is not particularly limited as long as the contact is allowed. For example, a column method, a batch mixing method, and the like can be employed as desired. In the column method, when the lithium selective adsorbent is used as a fine powder, it often has a high flow resistance, which makes continuous flow difficult. For this reason, it is preferred to use pellets produced by kneading the lithium selective adsorbent (including the case where it is a precursor before becoming the lithium selective adsorbent) with a binder, such as alumina binder, and then sintering it.

The pH of the first lithium-containing solution in the lithium adsorption step (1) is preferably 3 or more and 10 or less. Since the reaction in the lithium adsorption step (1) is a reaction to adsorb lithium and generate acid, the reaction speed may slow down or the reaction itself might not occur when the pH of the aqueous solution is low. Therefore, it is preferred to increase the pH of the first lithium-containing solution before bringing the first lithium-containing solution into contact with the lithium selective adsorbent. However, when magnesium is contained in the first lithium-containing solution, magnesium hydroxide precipitates when the pH is too high, and this magnesium hydroxide covers the surface of the lithium selective adsorbent, which physically inhibits the lithium adsorption reaction.

When the column method is employed as a method to bring the first lithium-containing solution into contact with the lithium selective adsorbent, the magnesium hydroxide often causes blockages in the column. From this perspective, the pH of the first lithium-containing solution is preferred to be equal to or below 10. When the pH is less than 3 after the solution has passed through the column, the lower portion of the column might not be able to adsorb lithium efficiently. For the above reasons, the pH of the first lithium-containing solution is preferred to be 3 or more and 10 or less in order to effectively promote the lithium adsorption reaction.

When the circulation method is used a method to bring the first lithium-containing solution into contact with the lithium selective adsorbent, a neutralizer is preferred to be added to an effluent after the column passage to adjust it to the above-described pH range and then return it to the column. When the column method is used, the flow rate can be varied according to the required amount to be processed. When the precipitates are generated after the neutralization, a filtration device, such as a filter press or a check filter, can be used as appropriate to facilitate the column passage. After the adsorption operation, the lithium selective adsorbent after the lithium adsorption may be washed with water as necessary in order to execute the next lithium elution step (2). For water washing in the case of passing through the column, after passing through the first lithium-containing solution, relatively pure distilled water or the like can be passed through the column to extrude and wash the remaining first lithium-containing solution inside. Water washing in the case of the batch mixing can be executed simply by pouring water over the lithium selective adsorbent after the solid-liquid separation and the lithium adsorption, which can remove the attached first lithium-containing solution.

### <Lithium Elution Step (2)>

In the lithium elution step (2) shown in Fig. 1, the lithium selective adsorbent is brought in contact with a mineral acid, such as hydrochloric acid, to obtain the second lithium-containing solution. The lithium selective adsorbent after the lithium adsorption has, for example, a form of the lithium manganese oxide, and lithium is eluted by contact between the lithium selective adsorbent after the lithium adsorption and a mineral acid, such as hydrochloric acid. The method for contact is generally a column method, but a batch mixing method is also acceptable, and the method of contact is arbitrary. The reaction equation in the lithium elution is shown in Formula 2.

[Formula 2] Li_{1.6}Mn_{1.6}O₄ + 1.6HCl → H_{1.6}Mn_{1.6}O₄ + 1.6LiCl

In the above reaction formula, Li_{1.6}Mn_{1.6}O₄ is indicated as the lithium manganese oxide, but it is not limited thereto. For example, the lithium selective adsorbent obtained from the lithium manganese oxide having a spinel structure can be used. It is sufficient that the mineral acid concentration is enough to elute lithium. However, when the concentration is too high, the lithium manganese oxide used in the lithium selective adsorbent will dissolve to be worn away. When the concentration is too low, the lithium is not eluted. As the mineral acid, hydrochloric acid, sulfuric acid, or nitric acid can be used. When any of these acids is used, the acid concentration is preferably 0.3 mol/L or more and 2.0 mol/L or less. In this case, lithium is eluted efficiently and the lithium selective adsorbent is not easily worn out. When the column method is used, the liquid flow rate may be changed according to the required amount to be processed.

An eluent obtained in the lithium elution step (2), that is, the second lithium-containing solution, contains a small amount of accompanying sodium, potassium, magnesium, and calcium in the lithium adsorption step (1). The eluent also contains manganese eluted from the lithium selective adsorbent. In addition, when a granulated body using an alumina binder is used as the lithium selective adsorbent, the second lithium-containing solution contains aluminum. Among these impurities, polyvalent metals other than sodium or potassium are removed in the impurity removing step (3) because they cause problems in the subsequent conversion step (4), such as shortening the membrane lifetime. In the elution operation, the lithium selective adsorbent after the lithium adsorption returns to the lithium selective adsorbent before the lithium adsorption, and is ready to adsorb lithium again. Therefore, it can be used again in the lithium adsorption step (1) as illustrated by the arrow *a* in Fig. 1. When being reused, the lithium selective adsorbent is preferably washed with water.

The second lithium-containing solution can be used in place of the mineral acid used in the lithium elution step (2) by supplementing this second lithium-containing solution with acid and making the hydrogen ion concentration of the acid in the range of 0.3 mol/L or more and 2.0 mol/L or less. Repeatedly using the second lithium-containing solution thus obtained in the lithium elution step (2) again in the lithium elution step (2) as shown by the arrow b in Fig. 1 allows increasing the lithium concentration in the second lithium-containing solution, and the liquid amount of the second lithium-containing solution used in the impurity removal step (3) as a subsequent step can be reduced. This allows decreasing a facility capacity in the step at and after the impurity removal step (3), and a facility cost and a running cost of, for example, chemical liquid can be reduced.

### <Impurity Removal Step (3)>

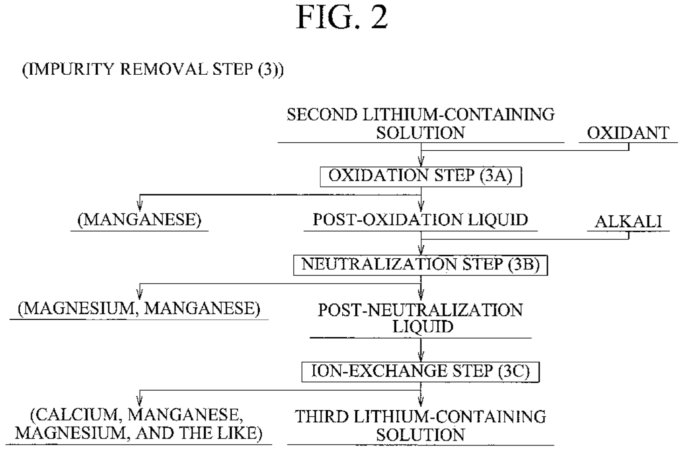

In the impurity removal step (3) shown in Fig. 1, some metal ions are removed from the second lithium-containing solution to obtain the third lithium-containing solution. Fig. 2 illustrates the details of the impurity removal step (3). The impurity removal step (3) includes the oxidization step (3A), the neutralization step (3B), and the ion-exchange step (3C), which are executed in this order. The impurity removal step (3) is not limited to the steps shown here, as long as some of the metal ions are removed.

### <Oxidation Step in Impurity Removal Step (3A)>

The oxidation step (3A) shown in Fig. 2 is a step of adding an oxidant to the second lithium-containing solution obtained in the lithium elution step (2) (see Fig. 1) to oxidize manganese in the second lithium-containing solution and obtain insoluble manganese dioxide, thereby precipitating to remove the manganese dissolved in the liquid. While the manganese is removable also in the neutralization step (3B) described later, the manganese is removed before the neutralization step (3B) by the oxidation step (3A). Therefore, the load of removing the manganese in the neutralization step (3B) can be reduced. The manganese precipitated to be removed in the oxidation step (3A) is reusable. As the type of the oxidant used in the oxidation step (3A), air, oxygen, sodium hypochlorite, or the like can be employed. It is sufficient that the second lithium-containing solution has a redox potential set to a pH and an electric potential in a region of manganese dioxide in a Pourbaix diagram.

### <Neutralization Step in Impurity Removal Step (3B)>

The neutralization step (3B) shown in Fig. 2 is a step of adding alkali to the post-oxidation liquid, which is obtained in the oxidation step (3A) as a previous step, allows obtaining the post-neutralization liquid and also obtaining a neutralized precipitate containing impurities. In the neutralization step (3B), the added alkali increases the pH, and mainly the magnesium becomes a hydroxide and precipitates as a neutralized precipitate.
Simultaneously, the manganese is also precipitated to be removed as a hydroxide. Accordingly, the pH of the post-neutralization liquid after the neutralization step (3B) is preferably set to be 8.5 or more and 12 or less. In this case, magnesium and manganese can be efficiently removed by precipitation. If the pH after the neutralization exceeds 12, the cost of the neutralizer increases and is not preferred.

### <<Ion-Exchange Step of Impurity Removal Step (3C)>>

The ion-exchange step (3C) shown in Fig. 2 is a step in which the post-neutralization liquid obtained in the neutralization step (3B) as a previous step is brought into contact with the ion exchange resin to obtain the third lithium-containing solution from which some impurities have been removed. In the ion-exchange step (3C), metals that cannot be removed in the step upstream of the ion-exchange step (3C), such as calcium that could not be removed in the neutralization step (3B), aluminium that remains depending on the pH of the neutralization step (3B), and manganese that remains in trace amounts that could not be removed in the neutralization step (3B), magnesium, and the like can be removed.

Chelating resins are preferred as the ion exchange resin to be used. For example, an iminodiacetic acid type resin can be used. Use of an iminodiacetic acid type chelating resin allows reducing the calcium concentration after treatment a low concentration. A specific example of the iminodiacetic acid type chelating resin is Amberlite IRC748 (Trade name: Organo Corporation). The column method is preferred for contact between the ion exchange resin and the third lithium-containing solution. However, a batch mixing method may also be employed in some cases.

### <Conversion Step (4)>

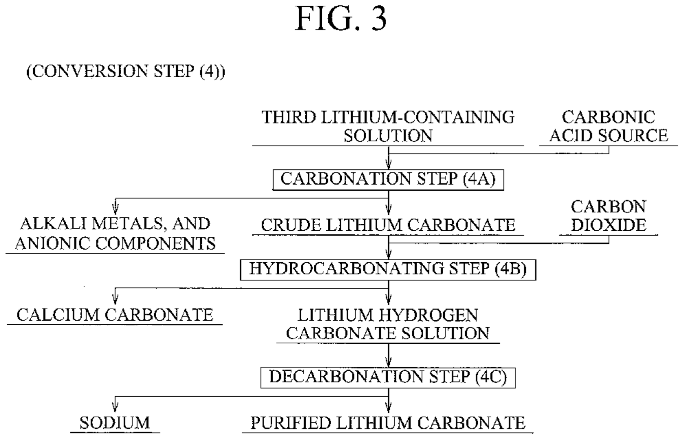

The conversion step (4) shown in Fig. 1 is a step of converting the lithium salt contained in the third lithium-containing solution from which some impurities have been removed to the lithium carbonate to obtain the lithium carbonate crystals. The conversion step (4) in this embodiment includes the carbonation step (4A), the hydrocarbonating step (4B), and the decarbonation step (4C), which are executed in this order, as shown in Fig. 3.

### <<Carbonation Step (4A) During Conversion Step>>

In the carbonation step (4A) shown in Fig. 3, lithium in the third lithium-containing solution is precipitated as crude lithium carbonate by adding a carbonic acid source, such as sodium carbonate, to the third lithium-containing solution obtained in the impurity removal step (3) as a previous step (see Fig. 1). This is then separated into solid-liquid, which is separated into the precipitated crude lithium carbonate and the supernatant solution, to remove alkali metals, such as sodium or potassium, and anionic components, such as boron, contained in the supernatant solution.

In this embodiment, sodium carbonate was used as the carbonic acid source, but it is not limited thereto. For example, alkali metal carbonates such as potassium carbonate can be used.

In this embodiment, the post-neutralization liquid (see Fig. 2) obtained in the neutralization step (3B) was held at 80°C to execute the carbonation step (4A), but it is not limited to this temperature. It can also be executed at room temperature. As the solubility of the lithium carbonate to be precipitated decreases as the temperature of the post-neutralization liquid increases, it is preferred to increase the temperature of the liquid in the range in which it does not boil. For example, it is preferred to be executed in the range from 70°C to 90°C.

The amount of carbonic acid source is preferably determined appropriately in relation to the amount of lithium contained in the post-neutralization liquid. The upper limit is preferably determined according to the solubility of the carbonic acid source.

### <<Hydrocarbonating Step of Conversion Step (4B)>>

The hydrocarbonating step (4B) shown in Fig. 3 is a step in which carbon dioxide is blown into the crude lithium carbonate recovered in the carbonation step (4A), with water added to produce a slurry. As shown in Formula 3, the crude lithium carbonate is converted to the lithium hydrogen carbonate having high solubility by reacting with carbon dioxide and water, thus obtaining a lithium hydrogen carbonate solution. In other words, the lithium hydrogen carbonate dissolves into a liquid to become a lithium hydrogen carbonate solution, while other insoluble impurities become solid. For example, this impurity is calcium carbonate, which is present in trace amounts in the crude lithium carbonate described above. This solid-liquid separation can remove calcium carbonate as an impurity.

[Formula 3] Li₂CO₃ + CO₂ + H₂O → 2LiHCO₃

In the hydrocarbonating step (4B) according to this embodiment, the temperature is preferably set to be 20°C or higher and 40°C or lower. The blown carbon dioxide preferably has an amount immediately before the unreacted and insoluble carbon dioxide starts to come out in a form of air bubbles.

### <<Decarbonation Step of Conversion Step (4C)>>

The decarbonation step (4C) shown in Fig. 3 is a step of converting the lithium hydrogen carbonate to a purified lithium carbonate having low solubility by heating the lithium hydrogen carbonate solution and reprecipitating it to obtain a purified lithium carbonate. The lithium hydrogen carbonate solution obtained in the hydrocarbonating step (4B) as a previous step contains a large amount of sodium. Therefore, to reduce this sodium concentration, the lithium carbonate in the crude lithium carbonate is dissolved as highly soluble lithium hydrogen carbonate in the hydrocarbonating step (4B) and then made into the lithium carbonate again in a form of the purified lithium carbonate in the decarbonation step (4C) to precipitate the purified lithium carbonate. In the precipitated purified lithium carbonate, sodium is almost completely removed, and the purity of the purified lithium carbonate can be increased. The purified lithium carbonate as a precipitate and the supernatant liquid are solid-liquid separated to obtain the purified lithium carbonate as the solid product.

The reaction equation for the decarbonation step (4C) is shown in Formula 4 below.

[Formula 4] 2LiHCO₃ → Li₂CO₃ + CO₂ + H₂O

In the decarbonation step (4C) according to the present embodiment, the temperature at which the decarbonation step is executed is not particularly limited, but it is preferred that the step is executed at a temperature of 50°C or higher and 100°C or lower, and more preferably at a temperature of 60°C or higher and 90°C or lower. When the temperature in the decarbonation step (4C) is 50°C or higher and 100°C or lower, the decarbonation reaction can proceed sufficiently to obtain the purified lithium carbonate of high purity. The heating method is not particularly limited, and it is preferred to employ a method appropriate to the scale of the reaction vessel. For example, a heating using a fluoroplastic-coated heater (Trade name: Teflon (registered trademark) heater) or a steam heating can be employed. In the solid-liquid separation of the decarbonation step according to the present embodiment, it is preferred to use a filter press.

As described above, according to the present embodiment, the lithium adsorption step (1), the lithium elution step (2), the impurity removal step (3), and the conversion step (4) are executed in the basic step, and in the impurity removal step (3), the three steps of the oxidation step (3A), the neutralization step (3B), and the ion-exchange step (3C) are executed. These steps can remove the impurities such as manganese, magnesium, calcium, and sodium with high precision. In the oxidation step (3A), an oxidant is used, and in the neutralization step (3B), alkali is used to remove the impurities, and then the ion-exchange resin is used to remove the remaining impurities. Since the most impurities are removed by the lithium adsorption step (1), which selectively adsorbs lithium, in the impurity removal step (3), the high purity lithium carbonate can be obtained at low cost without using large quantities of chemicals.

### Example

The following is an example of method for producing the lithium carbonate according to the present invention.

### (Example 1)

### <Lithium Adsorption Step (1)>

In the lithium adsorption step (1), H_{1.6}Mn_{1.6}O₄ was used as the lithium selective adsorbent. 500 mL (bulk density 1.0 g/mL) of this lithium selective adsorbent was filled in a cylindrical column having a capacity of approximately 650 mL, the first lithium-containing solution having a relatively low concentration shown in Table 1 passed therethrough as a raw material, and the first lithium-containing solution was brought into contact with the lithium selective adsorbent. The temperature was set to room temperature, the flow rate was set to be SV15, and the liquid passing quantity was set to be BV30. The pH of the first lithium-containing solution was about 8. Besides, the SV is an abbreviation for Space Velocity and represents a liquid passing quantity BV per unit time (one hour). The BV is an abbreviation for Bed Volume, and is a unit representing how many times of the volume of the lithium selective adsorbent in the column. In this example, SV15 is 7.5 L/h, and the capacity of the lithium selective adsorbent is 500 mL. Thus, BV30 is 15 L.

**[Table 1]**

| Contained metal | | Li | K | Mg | Na | Ca | B | Mn |
|---|---|---|---|---|---|---|---|---|
| Concentration | g/L | 0.710 | 19.200 | 17.100 | 73.000 | 1.200 | 0.980 | < 0.001 |

### <Lithium Elution Step (2)>

In the lithium elution step (2), the lithium selective adsorbent, on which lithium was adsorbed, used in the lithium adsorption step (1) was first washed with water. Then, 0.5 mol/L of the hydrochloric acid solution passed through to elute lithium to obtain the second lithium-containing solution. After washing with water, the elution was further repeated for the lithium selective adsorbent. During this repetition, the one obtained by supplement hydrochloric acid to the eluent obtained before the repetition, that is, the second lithium-containing solution obtained before the repetition and adjusting the resultant such that the free acid concentration became 0.5 mol/L was used. The composition of the second lithium-containing solution after repeating this process 10 times is shown in Table 2. Since the lithium concentration increased from 0.710 g/L shown in Table 1 to 6.500 g/L shown in Table 2, it is indicated that lithium can be selectively recovered by the lithium selective adsorbent used in this example.

**[Table 2]**

| Contained metal | | Li | K | Mg | Na | Ca | B | Mn |
|---|---|---|---|---|---|---|---|---|
| Concentration | gL | 6.500 | 0.260 | 0.600 | 0.270 | 0.590 | 0.017 | 0.093 |

### <Oxidation Step (3A) in Impurity Removal Step (3)>

In the oxidation step (3A), a post-oxidation liquid was obtained by adding sodium hydroxide aqueous solution with a molar concentration of 8 mol/L as a neutralizer and sodium hypochlorite with an effective concentration of 12% as an oxidant such that the pH of the second lithium-containing solution was 5 and the redox potential was 730 mV at a silver chloride electrode. This step (3A) was executed entirely at room temperature (20°C). The composition of the metals contained in the post-oxidation liquid is shown in Table 3. In the post-oxidation liquid, the manganese concentration (unit g/L) decreased from 0.093 to <0.001, indicating that the manganese content has been reduced.

**[Table 3]**

| Contained metal | | Li | K | Mg | Na | Ca | B | Mn |
|---|---|---|---|---|---|---|---|---|
| Concentration | gL | 6.300 | 0.260 | 0.570 | 2.100 | 0.580 | 0.017 | < 0.001 |

### <Neutralization Step (3B) in Impurity Removal Step (3)>

In the neutralization step (3B), the post-neutralization liquid was obtained by adding sodium hydroxide with a molar concentration of 8 mol/L to the post-oxidation liquid as a neutralizer, and the pH was adjusted to 11. The step (3B) was executed entirely at room temperature. The composition of the contained metals in this post-neutralization liquid is shown in Table 4. It can be seen that the post-neutralization liquid contains less magnesium and manganese, since the magnesium concentration (unit: g/L) decreased from 0.570 to <0.001.

**[Table 4]**

| Contained metal | | Li | K | Mg | Na | Ca | B | Mn |
|---|---|---|---|---|---|---|---|---|
| Concentration | gL | 6.300 | 0.260 | < 0.001 | 3.400 | 0.530 | 0.016 | < 0.001 |

### <Ion-Exchange Step (3C) in Impurity Removal Step (3)>

In the ion-exchange step (3C), the post-neutralization liquid obtained in the neutralization step (3B) passed through a column filled with an iminodiacetic acid type chelating resin (Amberlite IRC748) (Trade name: Organo Corporation) at SV5 to bring the liquid into contact with the resin to obtain the third lithium-containing solution. This step (3C) was executed at room temperature (20°C). The composition of the contained metals in this third lithium-containing solution is shown in Table 5. It can be seen that the concentrations (unit: g/L) of magnesium and calcium have been dramatically reduced.

**[Table 5]**

| Contained metal | | Li | K | Mg | Na | Ca | B | Mn |
|---|---|---|---|---|---|---|---|---|
| Concentration | g/L | 6.0 | 0.44 | <0.00005 | 5.0 | <0,00005 | 0.022 | <0,00005 |

### <Carbonation Step (4A) in Conversion Step (4)>

In the carbonation step (4A), sodium carbonate as the carbonic acid source was added to the third lithium-containing solution obtained in the ion-exchange step (3C) to have a weight concentration of 200 g/L, and the crude lithium carbonate was obtained after the solid-liquid separation. This step (4A) was executed at a temperature of 80°C. Impurity concentrations (unit: ppm) in this crude lithium carbonate are shown in Table 6.

**[Table 6]**

| Contained metal | | K | Mg | Na | Ca | B | Mn |
|---|---|---|---|---|---|---|---|
| Concentration | ppm | 150 | 23 | 26000 | 26 | 16 | <10 |

### <Hydrocarbonating step (4B) in Conversion Step (4)>

In the hydrocarbonating step (4B), water was added to the crude lithium carbonate obtained in the carbonation step (4A) to obtain the slurry containing the crude lithium carbonate. Carbon dioxide was blown into this slurry to obtain the lithium hydrogen carbonate solution. The flow rate was adjusted such that only a few bubbles of unreacted and undissolvable carbon dioxide were produced. This step (4B) was executed at room temperature (20°C). The slurry containing the crude lithium carbonate was able to be solid-liquid separated to remove calcium carbonate as an impurity.

### <Decarbonation Step (4C) in Conversion Step (4)>

In the decarbonation step (4C), the lithium hydrogen carbonate solution obtained in the hydrocarbonating step (4B) was heated to 80°C to obtain the purified lithium carbonate. The impurity concentrations (unit: ppm) in this purified lithium carbonate are shown in Table 7. Compared with Table 6, it can be seen that all the impurities were reduced, especially sodium was reduced. The purified lithium carbonate thus obtained was the high-purity purified lithium carbonate that can be used as a raw material for batteries.

**[Table 7]**

| Contained metal | | K | Mg | Na | Ca | B | Mn |
|---|---|---|---|---|---|---|---|
| Concentration | ppm | < 20 | < 10 | < 10 | < 10 | < 10 | < 10 |

From the above experimental results, it was found that the high purity lithium carbonate can be obtained more efficiently than before by going through each of the steps of the present invention in sequence.

### Industrial Applicability

The lithium carbonate obtained by the present invention can be used for the lithium-based rechargeable battery production. Typical applications for such lithium-based rechargeable batteries for use in vehicle batteries, but they can also be used for other applications such as PCs.

### Reference Signs List

- (1): Lithium adsorption step
- (2): Lithium elution step
- (3): Impurity removal step
- (4): Conversion step
- (3A): Oxidation step
- (3B): Neutralization step
- (3C): Ion-exchange step
- (4A): Carbonation step
- (4B): Hydrocarbonating step
- (4C): Decarbonation step

## Claims

1. A method for producing lithium carbonate, comprising:
(1) a lithium adsorption step of bringing a first lithium-containing solution having a low lithium concentration as raw material into contact with a lithium selective adsorbent to adsorb lithium on the lithium selective adsorbent;
(2) a lithium elution step of eluting lithium from the lithium selective adsorbent on which lithium is adsorbed to obtain a second lithium-containing solution;
(3) an impurity removal step of removing a part of metal ions from the second lithium-containing solution to obtain a third lithium-containing solution; and
(4) a conversion step of converting the lithium salt contained in the third lithium-containing solution to lithium carbonate to obtain crystals of the lithium carbonate, wherein
these steps are sequentially executed, and
the impurity removal step includes:
(3A) an oxidation step of oxidizing manganese in the second lithium-containing solution to a form of insoluble manganese dioxide by adding oxidant to the second lithium-containing solution;
(3B) a neutralization step of adding alkali to the second lithium-containing solution after executing the oxidation step to precipitate out mainly the magnesium in the second lithium-containing solution and the manganese remaining after the oxidation step as hydroxides to obtain a post-neutralization liquid in which magnesium and manganese are decreased; and
(3C) an ion-exchange step of bringing the post-neutralization liquid obtained in the neutralization step into contact with an ion exchange resin to remove mainly calcium and aluminium and to remove magnesium and manganese remaining after the neutralization step to obtain the third lithium-containing solution, wherein
these steps are sequentially executed.

2. The method for producing lithium carbonate according to claim 1, wherein
the conversion step includes:
(4A) a carbonation step of adding a carbonic acid source to the third lithium-containing solution obtained in the impurity removal step to obtain a crude lithium carbonate;
(4B) a hydrocarbonating step of blowing carbon dioxide into the slurry containing the crude lithium carbonate to obtain a lithium hydrogen carbonate solution; and
(4C) a decarbonation step of heating the lithium hydrogen carbonate solution to obtain a purified lithium carbonate, wherein
these steps are sequentially executed.

3. The method for producing lithium carbonate according to claim 2, wherein
a temperature in the decarbonation step of the conversion step is 50°C or higher and 100°C or lower.

4. The method for producing lithium carbonate according to any one of claims 1 to 3, wherein
the lithium selective adsorbent in the lithium adsorption step is manganese oxide in which lithium manganese oxide is brought into contact with an acid to desorb lithium in the lithium manganese oxide.

5. The method for producing lithium carbonate according to any one of claims 1 to 4, wherein
a hydrogen ion concentration of the acid used in the lithium elution step is 0.3 mol/L or more and 2.0 mol/L or less.

6. The method for producing lithium carbonate according to any one of claims 1 to 5, wherein
a pH of the post-neutralization liquid in the neutralization step of the impurity removal step is 8.5 or more and 12 or less.

7. The method for producing lithium carbonate according to any one of claims 1 to 6, wherein
an ion exchange resin used in the ion-exchange step of the impurity removal step is an iminodiacetic acid type chelating resin.
